# EUROPÄISCHE PATENTANMELDUNG

(11) **EP 4 417 765 A1**
(43) Veröffentlichungstag der Anmeldung: **21.08.2024**
(21) Anmeldenummer: 23157290.0
(22) Anmeldetag: 17.02.2023
(51) Int. Cl.: E04F 11/18, F16B 7/04

(54) **VERBINDUNGSSYSTEM ZUR VERBINDUNG VON GELÄNDERTEILSTÜCKEN VON GELÄNDERN**

(71) Anmelder: Bangratz, René, 74076 Heilbronn (DE)
(72) Erfinder: Bangratz, René, 74076 Heilbronn (DE)
(74) Vertreter: Wimmer, Stephan

(57) **Zusammenfassung**

1. Vorgeschlagen wird ein Verbindungssystem zur Verbindung von Geländerteilstücken von Geländern, wobei das Verbindungssystem einerseits mindestens ein Profilverbindungselement (20, 20') zur Verbindung von Tragprofilteilen (10, 10') der Geländer aufweist und andererseits mindestens ein Verbindungsmittel (28) zur Verbindung von Untergurtabschnitten (26, 26') von Handläufen aufweist.

## Beschreibung

Die Erfindung betrifft ein Verbindungssystem zur Verbindung von Geländerteilstücken von Geländern nach dem Oberbegriff des Anspruchs 1.

### Stand der Technik

Bekannt sind Vorrichtungen wie Geländer als Absturzsicherungen für Balkone, Terrassen oder Loggien von Gebäuden. Die Geländer können in Tragprofilen angeordnet und eingespannt gehalten sein. Als Tragprofile kommen insbesondere U-Profile zum Einsatz.

Geländer sind zur Sicherung weit verbreitet. Geländer können beispielsweise zur Sicherung entlang einem Balkonrand oder vor Fenstern, insbesondere bodentiefen Fenstern, vorgesehen sein. Sollen längere Bereiche mit einem Geländer abgesichert werden, wird die Balkonkonstruktion aus mehreren Balkonteilen zusammengefügt. Dies erfolgt mit wenig ansehnlichen Verschraubungskonstruktionen oder durch Zusammenweißen. Dies ist aufwändig und zeitraubend.

Herkömmliche Montageanordnungen für Geländer aus Geländerteilstücken weisen unterschiedliche Nachteile auf. Die vorgefertigten Elemente mit den Tragprofilen werden aufwändig und nicht immer stabil miteinander verbunden.

Die DE 295 09 140 U1 offenbart einen "Verbinder, insbesondere für Handläufe". Der Verbinder ist als Kugelkörper ausgebildet und weist zwei halbkugelförmige Verbinderhälften auf, die relativ zueinander verdrehbar sind und jeweils einen Verbinderstift aufweisen, deren rückwärtige, sich überlappende Enden, von einer Drehachse durchsetzt sind, und deren vordere Enden je ein Gewinde aufweisen, mit dem jeweils ein Verspannen zwischen dem Verbinder und zwei zu verbindenden Handläufen durchführbar ist.

Eine einfache und sichere Lösung für Konstruktionen und Positionen zur Verbindung von Balkonteilen an Baukörpern ist damit nicht offenbart.

Der Erfindung liegt die Aufgabe zugrunde, Verbesserungen im Hinblick auf die genannten Nachteile herkömmlicher Ansätze zur Montage eines Geländers bereitzustellen.

### Offenbarung der Erfindung

Die Erfindung wird durch die Merkmale des Hauptanspruchs offenbart. Ausführungsformen und Weiterbildungen sind Gegenstand der sich an den Hauptanspruch anschließenden weiteren Ansprüche.

Es wird ein Verbindungssystem zum Verbinden von Geländerteilstücken von Geländern, einerseits aufweisend mindestens ein Profilverbindungselement, wobei das Profilverbindungselement der Verbindung von Tragprofilen für Balkongeländer dient, sowie andererseits aufweisend mindestens ein Verbindungsmittel zur Verbindung von Untergurtkonstruktionen von Handläufen mit Untergurtabschnitten, offenbart.

Das erfindungsgemäße Profilverbindungselement dient der Verbindung von Geländerteilstücken von Geländern, insbesondere von Geländern aufweisend Geländerstäbe, an einem Baukörper. Die Geländerteilstücke mit ca. 2 Meter lang ausgebildeten Tragprofilen werden aneinandergesetzt und zu längeren Geländereinheiten angeordnet. Die Verbindung dieser Geländerteilstücke erfolgte bislang aufwändig durch Verschrauben oder Verschweißen.

Die Tragprofile weisen Systemeinschubrinnen auf. Des Weiteren weist mindestens ein Schenkel der zu verbindenden Tragprofile eine Systemhohlraum auf, in der insbesondere zwei Führungsnasen ausgebildet sind. Die Führungsnasen sowie die Systemeinschubrinnen ermöglichen das Einbringen der Profilverbindungselemente. Die Profilverbindungselemente sind insbesondere plattenartig in einer länglichen Rechteckform und aus Metall oder Leichtmetall, beispielsweise Aluminium oder geeigneten Legierungen, ausgebildet. Die Profilverbindungselemente können jedoch auch in jeder anderen geeigneten Form wie Rundformen, mit quadratischem Durchmesser oder als Klötzchen ausgebildet sein.

Zur rutschsicheren Befestigung der Tragprofile können in die Profilverbindungselemente Rutschhemmer eingearbeitet sein. Dies sind insbesondere eingeklopfte bzw. eingedrehte Schrauben, bei denen ein kleiner überstehender Teil der Spitze über eine Oberfläche des Profilverbindungselements hinaussteht und beim Einbringen des Profilverbindungselements in die Systemeinschubrinne oder auch innerhalb der Führungsnasen eine geeignete Einpassung und Positionierung ermöglicht und ein ungewolltes Rutschen in eine ungünstige Position verhindert wird.

Die Profilverbindungselemente können in die Systemeinschubrinnen sowie in einen Bereich der Systemhohlraum, geführt durch die Führungsnasen, eingeschoben werden. Beispielsweise in den Systemeinschubrinnen können die Profilverbindungselemente hineingeklopft und ggf. verklebt oder verschraubt werden.

Das Profilverbindungselement weist eine L-Form auf. Das L-förmig ausgebildete Profilverbindungselement kann so am Baukörper angeordnet werden, dass ein Aufsatzschenkel des L für die Anordnung der Geländerstäbe nach unten in Richtung einer Bodenfläche zeigt. Das Profilverbindungselement kann auch um 180° gekippt angeordnet werden, so dass der Aufsatzschenkel nach oben entgegengesetzt zur Bodenfläche zeigt. In diesem Fall sind die Geländerstäbe an einer nach oben zeigenden Aufsatzfläche angeordnet. Die Profilverbindungselemente können unabhängig von der Ausrichtung der Tragprofile am Baukörper zur Verbindung mehrerer Tragprofile eingesetzt werden.

An den Geländerstäben ist an ihrem nach oben, entgegengesetzt zu dem Verbindungsschenkel für die Geländerstäbe zeigenden Ende, ein Handlauf mit einem Ober- und einem Untergurt ausgebildet. Die Handläufe der verschiedenen Geländerteilstücke werden im Verbindungssystem ebenfalls mit Verbindungsmitteln miteinander verbunden. Dazu weisen insbesondere Abschnitte des Untergurts, der auf die Geländerstäbe aufgesetzt ist, Einschubhaltevorrichtungen zur Verbindung der Untergurtabschnitte auf.

Weitere Vorteile und vorteilhafte Ausgestaltungen der Erfindung sind der nachfolgenden Figurenbeschreibung, den Zeichnungen und den Ansprüchen entnehmbar.

Nachfolgend wird ein Ausführungsbeispiel der erfindungsgemäßen Lösung anhand der beigefügten schematischen Zeichnungen näher erläutert. Es zeigt:
- Fig. 1: zeigt eine schematische Schrägansicht zweier Tragprofilteile zur Verbindung mit Profilverbindungselementen als Ausschnitt,
- Fig. 2: stellt eine Schnittansicht durch ein Tragprofil mit eingebrachten Profilverbindungselementen dar,
- Fig. 3: zeigt eine Draufsicht schräg von oben auf einen Untergurt eines Handlaufs mit Verbindungsmitteln,
- Fig. 4: zeigt schematisch die Einbringung der Verbindungsmittel in den Untergurt in einer isometrischen Ansicht,
- Fig. 5: stellt einen Längsschnitt durch einen Geländerstab mit dem Untergurt sowie Verbindungsmitteln dar
- Fig. 6: stellt ein Profilverbindungselement in einer Schrägansicht dar,
- Fig. 7: zeigt ein alternatives Profilverbindungselement in einer Draufsicht und
- Fig. 8: zeigt ein abgewandeltes Profilverbindungselement in Draufsicht.

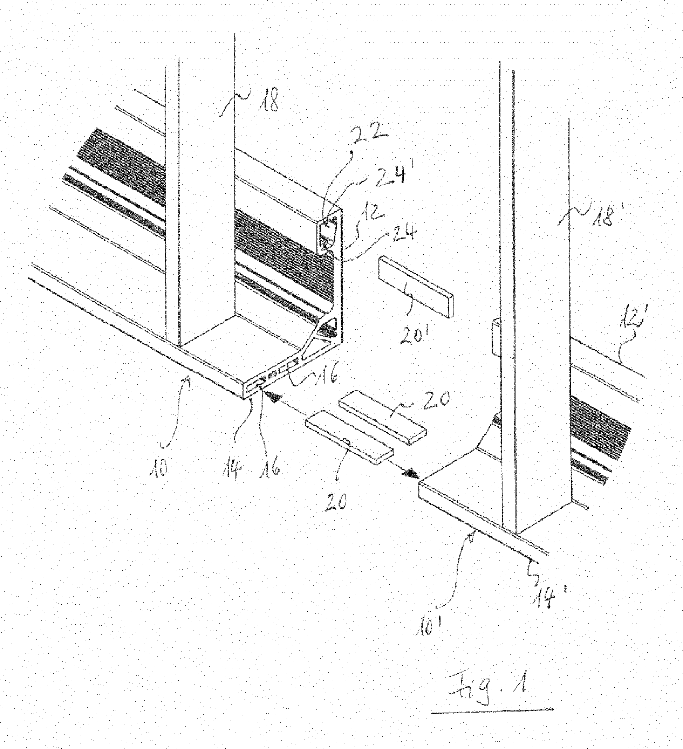

In Fig. 1 sind in einer Ausschnittsansicht zwei Tragprofilteile 10 und 10' dargestellt. Die Tragprofilteile 10 und 10' weisen jeweils einen Befestigungsschenkel 12, der in Richtung eines (nicht dargestellten) Baukörpers ausgerichtet ist, und einen Aufsatzschenkel 14 auf. Der Aufsatzschenkel 14 weist mindestens eine Systemeinschubrinne 16 auf. Auf dem Aufsatzschenkel 14 sind Geländerstäbe 18 angeordnet. In diese Systemeinschubrinne 16 wird zur Verbindung der beiden Tragprofilteile 10 und 10' jeweils ein Profilverbindungselement 20 eingeschoben oder eingeklopft.

An einem einer Ecke des Befestigungsschenkels 12 entgegengesetzten Ende ist eine Systemhohlraum 22 angeordnet. Die Systemhohlraum 22 weist mindestens zwei Führungsnasen 24, 24' zum Einschieben eines weiteren Profilverbindungselements 20' auf. Dieses Profilverbindungselement 20' wird in einer gegenüber den Profilverbindungselementen 20, die in die Systemeinschubrinne 16 eingebracht werden, in einer um 90° gekippten Position zwischen die Führungsnasen 24 und 24'eingeschoben. Dadurch entsteht eine einfach zu montierende und sehr sichere Verbindung von Geländerteilstücken und deren einzelnen Tragprofilteilen 10, 10'. Die Profilverbindungselemente 20, 20' sind insbesondere plattenartig in einer länglichen Rechteckform und aus Metall oder Leichtmetall, beispielsweise Aluminium oder geeigneten Legierungen, ausgebildet.

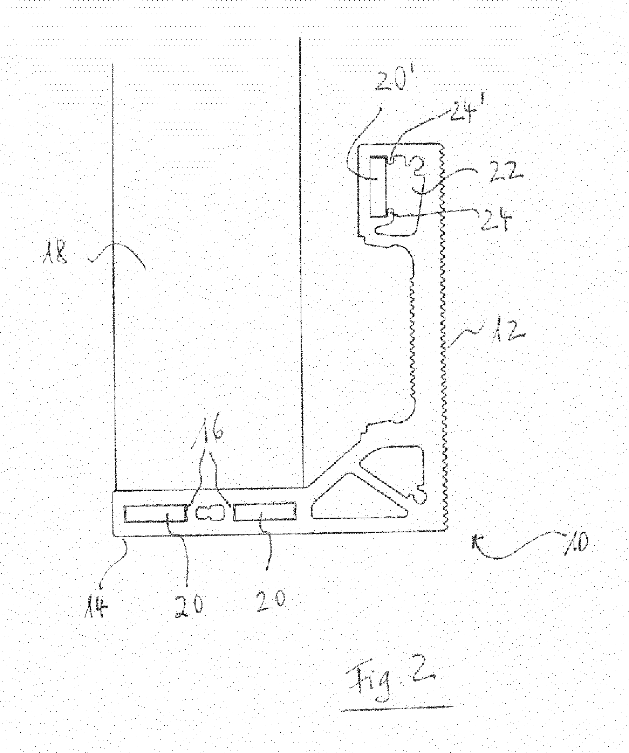

Fig. 2 zeigt das Tragprofilteil 10 mit dem Befestigungsschenkel 12 und dem Aufsatzschenkel 14. Innerhalb der Systemeinschubrinnen 16 des Aufsatzschenkels 14 sind Profilverbindungselemente 20 eingebracht. Zwischen zwei Führungsnasen 24, 24' innerhalb der Systemhohlraum 22 des Befestigungsschenkels 12 ist ein weiteres Profilverbindungselement 20' eingebracht.

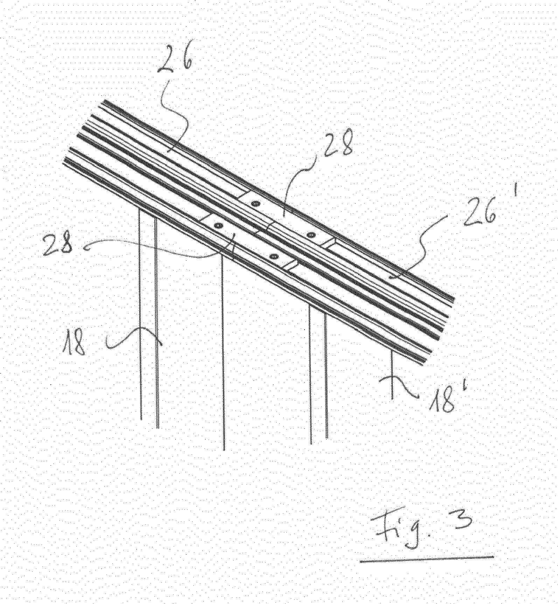

Fig. 3 zeigt einen auf den Geländerstäben 18 aufgesetzten Untergurt eines Handlaufs mit den Untergurtabschnitten 26, 26'. Die Untergurtabschnitte 26, 26' sind mit Verbindungsmitteln 28 verbunden. Diese Verbindungsmittel 28 können an ihren jeweiligen Enden mit den Untergurtabschnitten 26, 26' durch Verschrauben insbesondere durch Einschieben oder Einklopfen verbunden werden. Es kann ebenso ein Einkleben oder eine andere Verbindungsart erfolgen.

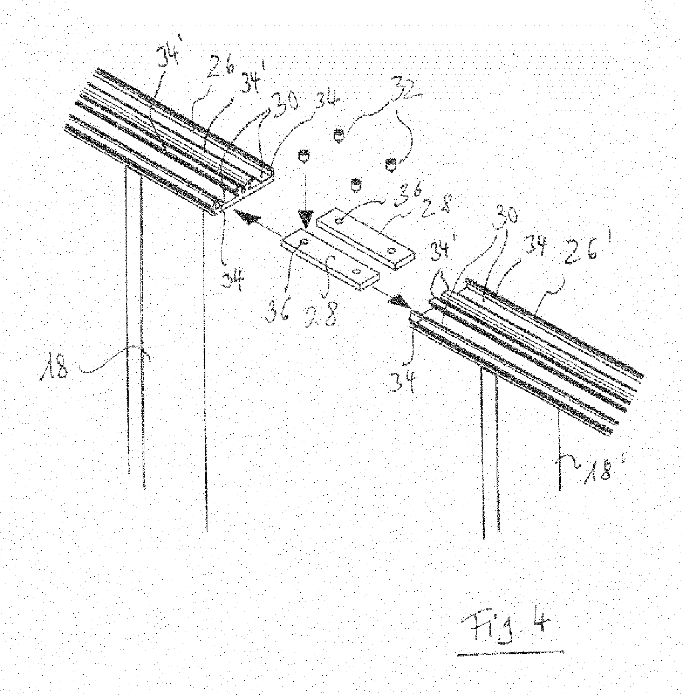

Fig. 4 zeigt die Anbringung der Verbindungsmittel 28 in Einschubhaltevorrichtungen 30. Die Verbindungsmittel 28 können mit Schrauben, insbesondere Madenschrauben 32, in der während der Montage offen zugänglichen Einschubhaltevorrichtung 30 am Untergurtabschnitt 26 sowie 26', befestigt werden. Die Einschubhaltevorrichtung 30 weist jeweils klammerartig ausgebildete Haltenasen 34 sowie 34' auf, zwischen welche die Eischubhaltevorrichtungen 30 jeweils eingeschoben und dort in der geeigneten Position insbesondere mittig abdeckend zwischen den zu verbindenden Untergurtabschnitten 26, 26' angeordnet und mit den Madenschrauben 32 verbunden werden. Die Verbindungsmittel 28 sind als längliche Metallhalter mit einem rechteckigen Längsschnitt sowie Schraublöchern 36, die zum Einbringen der Madenschrauben 32 dienen, ausgebildet.

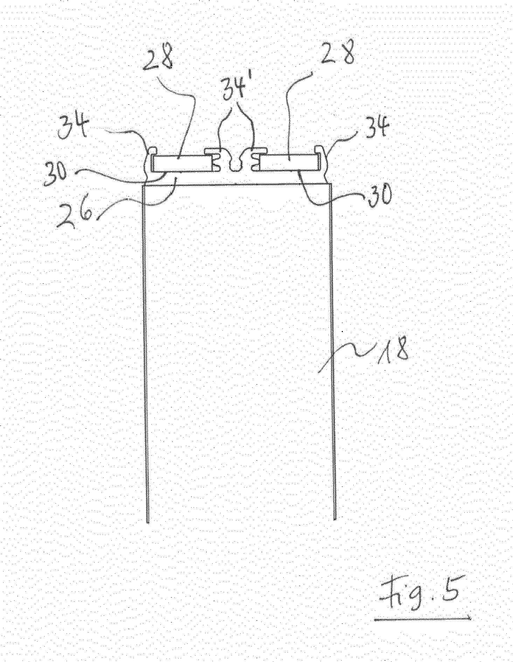

Fig. 5 stellt den Geländerstab 18 mit einem aufgebrachten Untergurtabschnitt 26 dar. Der Untergurtabschnitt 26 weist zwei Einschubhaltevorrichtungen 30 zum Einschieben sowie zur Befestigung von Verbindungsmitteln 28 auf. Dazu weist die Einschubhaltevorrichtung 30 klammerartig ausgebildete Haltenasen 34 und 34' auf, zwischen denen die Verbindungsmittel 28 eingeschoben und mit denen sie gehalten werden.

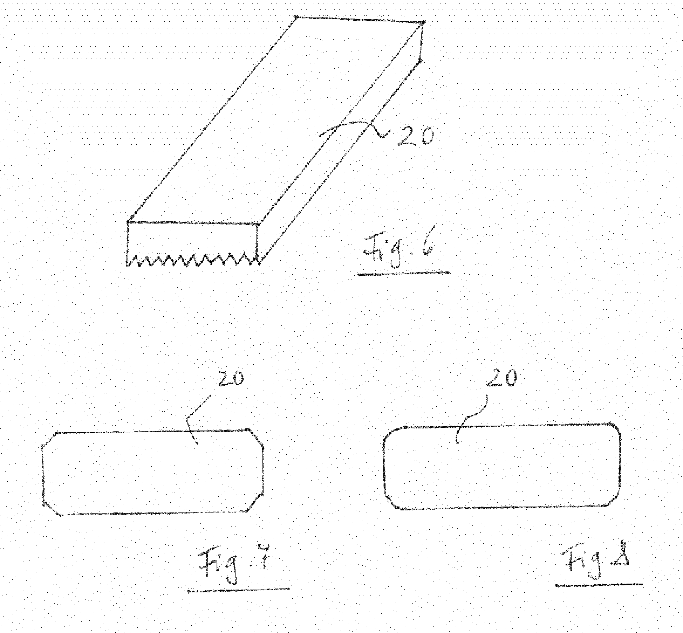

Fig. 6 zeigt ein Profilverbindungselement 20, das in dessen Längserstreckung an einer Ober- oder Unterseite geriffelt ausgebildet ist.

Fig. 7 zeigt ein alternatives Profilverbindungselement 20 mit abgefasten Eckbereichen.

Fig. 8 zeigt ein abgewandeltes Profilverbindungselement 20 mit abgerundeten Eckbereichen.

Die Verbindungsmittel 28 können entsprechend den Ausführungen der Fig. 6 bis Fig. 8 ebenfalls in abgewandelten Ausformungen ausgebildet sein. Die abgerundeten oder abgefasten Eckbereiche dienen einem erleichterten Einbringen der Profilverbindungselemente 20 in Systemeinschubrinnen 16 und der Profilverbindungselemente 20' in Systemhohlräume 22 und/oder der Verbindungsmittel 28 in Untergurtabschnitte 26, 26'.

Alle in der Beschreibung, den nachfolgenden Ansprüchen und den Zeichnungen dargestellten Merkmale können sowohl einzeln als auch in beliebiger Kombination miteinander erfindungswesentlich sein.

### Bezugszeichenliste

- 10: Tragprofilteil
- 10*'*: Tragprofilteil
- 12: Befestigungsschenkel
- 12*'*: Befestigungsschenkel
- 14: Aufsatzschenkel
- 14*'*: Aufsatzschenkel
- 16: Systemeinschubrinne
- 18: Geländerstab
- 18*'*: Geländerstab
- 20: Profilverbindungselement
- 20*'*: Profilverbindungselement
- 22: Systemhohlraum
- 24: Führungsnase
- 24*'*: Führungsnase
- 26: Untergurtabschnitt
- 26*'*: Untergurtabschnitt
- 28: Verbindungsmittel
- 30: Einschubhaltevorrichtung
- 32: Madenschraube
- 34: Haltenase
- 34*'*: Haltenase
- 36: Schraublöcher

## Patentansprüche

1. Verbindungssystem zur Verbindung von Geländerteilstücken von Geländern, **dadurch gekennzeichnet, dass** das Verbindungssystem einerseits mindestens ein Profilverbindungselement (20, 20') zur Verbindung von Tragprofilteilen (10, 10') der Geländerteilstücke und andererseits mindestens ein Verbindungsmittel (28) zur Verbindung von Untergurtabschnitten (26, 26') von Handläufen aufweist.

2. Verbindungssystem nach Anspruch 1, **dadurch gekennzeichnet, dass** das Verbindungssystem die zu verbindende Tragprofilteile (10) und (10') umfasst, die jeweils einen Befestigungsschenkel (12) und einen Aufsatzschenkel (14) aufweisen, wobei der Aufsatzschenkel (14) mindestens eine Systemeinschubrinne (16) aufweist, in die zur Verbindung der beiden Tragprofilteile (10) und (10') jeweils ein Profilverbindungselement (20, 20') in jede Systemeinschubrinne (16) eingebracht ist.

3. Verbindungssystem nach einem der vorhergehenden Ansprüche, **dadurch gekennzeichnet, dass** der Befestigungsschenkel (12) einen Systemhohlraum (22) umfasst, die mindestens zwei Führungsnasen (24, 24') zum Einschieben eines Profilverbindungselements 20' aufweist.

4. Verbindungssystem nach Anspruch 3, **dadurch gekennzeichnet, dass** das Profilverbindungselement (20') in einer gegenüber den Profilverbindungselementen (20), die in die Systemeinschubrinne (16) eingebracht sind, in einer um 90° gekippten Position zwischen die Führungsnasen (24) und (24') eingeschoben sind.

5. Verbindungssystem nach einem der vorhergehenden Ansprüche, **dadurch gekennzeichnet, dass** die Profilverbindungselemente (20, 20') plattenartig in einer länglichen Rechteckform und aus Metall oder Leichtmetall oder geeigneten Legierungen ausgebildet sind.

6. Verbindungssystem nach einem der vorhergehenden Ansprüche, **dadurch gekennzeichnet, dass** auf Geländerstäben (18), die am Aufsatzschenkel (14) angeordnet sind, ein Untergurt, aufweisend Untergurtabschnitte (26, 26'), eines Handlaufs aufgesetzt ist, wobei die Untergurtabschnitte (26, 26') mit den Verbindungsmitteln (28) verbunden sind.

7. Verbindungssystem nach einem der vorhergehenden Ansprüche, **dadurch gekennzeichnet, dass** die Verbindungsmittel (28) an ihren jeweiligen Enden mit den Untergurtabschnitten (26, 26') durch Verschrauben verbunden sind.

8. Verbindungssystem nach einem der vorhergehenden Ansprüche, **dadurch gekennzeichnet, dass** die Verbindungsmittel (28) mit Madenschrauben (32) in einer während der Montage offen zugänglichen Einschubhaltevorrichtung (30) jeweils am Untergurtabschnitt (26) sowie (26') befestigt sind.

9. Verbindungssystem nach Anspruch 8, **dadurch gekennzeichnet, dass** die Einschubhaltevorrichtungen (30) jeweils klammerartig ausgebildete Haltenasen (34) sowie (34') umfassen, zwischen denen die Verbindungsmittel (28) in die Eischubhaltevorrichtungen (30) eingeschoben und dort in einer geeigneten Position mittig abdeckend an den zu verbindenden Untergurtabschnitten (26, 26') angeordnet sind.

10. Verbindungssystem nach einem der vorhergehenden Ansprüche, **dadurch gekennzeichnet, dass** die Verbindungsmittel (28) als längliche Metallhalter mit einem rechteckigen Längsschnitt sowie mit Schraublöchern (36) zum Einbringen der Madenschrauben (32) ausgebildet sind.

11. Verbindungssystem nach einem der vorhergehenden Ansprüche, **dadurch gekennzeichnet, dass** die Profilverbindungselemente (20) in Systemeinschubrinnen (16) und die Profilverbindungselemente (20') in Systemhohlräume (22) eingeklopft und/oder verklebt sind.

12. Verbindungssystem nach einem der vorhergehenden Ansprüche, **dadurch gekennzeichnet, dass** die Verbindungsmittel (28) in Untergurtabschnitte (26, 26*'*) eingeklopft und/oder verklebt sind.

13. Verbindungssystem nach einem der vorhergehenden Ansprüche, **dadurch gekennzeichnet, dass** die Profilverbindungselemente (20, 20*'*) und/oder die Verbindungsmittel (28) rechteckig und plattenförmig ausgebildet sind und/oder eine geriffelte Fläche und/oder abgefaste Eckbereiche und/oder abgerundete Eckbereiche aufweisen.

14. Verbindungssystem nach einem der vorhergehenden Ansprüche, **dadurch gekennzeichnet, dass** die Tragprofilteile (10, 10') als Flachprofile ausgebildet sind.

## Geänderte Patentansprüche

### Geänderte Patentansprüche gemäss Regel 137(2) EPÜ.

1. Verbindungssystem zur Verbindung von Geländerteilstücken von Geländern, wobei das Verbindungssystem einerseits mindestens ein Profilverbindungselement (20, 20') zur Verbindung von Tragprofilteilen (10, 10') der Geländerteilstücke und andererseits mindestens ein Verbindungsmittel (28) zur Verbindung von Untergurtabschnitten (26, 26') von Handläufen aufweist,
**dadurch gekennzeichnet, dass**
die Verbindungsmittel (28) in Untergurtabschnitte (26, 26') eingeklopft und/oder verklebt sind.

2. Verbindungssystem nach Anspruch 1, **dadurch gekennzeichnet, dass** das Verbindungssystem die zu verbindende Tragprofilteile (10) und (10') umfasst, die jeweils einen Befestigungsschenkel (12) und einen Aufsatzschenkel (14) aufweisen, wobei der Aufsatzschenkel (14) mindestens eine Systemeinschubrinne (16) aufweist, in die zur Verbindung der beiden Tragprofilteile (10) und (10') jeweils ein Profilverbindungselement (20, 20') in jede Systemeinschubrinne (16) eingebracht ist.

3. Verbindungssystem nach Anspruch 2, **dadurch gekennzeichnet, dass** der Befestigungsschenkel (12) einen Systemhohlraum (22) umfasst, die mindestens zwei Führungsnasen (24, 24') zum Einschieben eines zweiten Profilverbindungselements 20' aufweist.

4. Verbindungssystem nach Anspruch 3, **dadurch gekennzeichnet, dass** das Profilverbindungselement (20') in einer gegenüber den Profilverbindungselementen (20), die in Systemeinschubrinnen (16) eingebracht sind, in einer um 90° gekippten Position zwischen die Führungsnasen (24) und (24') eingeschoben sind.

5. Verbindungssystem nach einem der vorhergehenden Ansprüche, **dadurch gekennzeichnet, dass** die Profilverbindungselemente (20, 20') plattenartig in einer länglichen Rechteckform und aus Metall oder Leichtmetall oder geeigneten Legierungen ausgebildet sind.

6. Verbindungssystem nach einem der vorhergehenden Ansprüche, **dadurch gekennzeichnet, dass** auf Geländerstäben (18), die Aufsatzschenkel (14) angeordnet sind, ein Untergurt, aufweisend Untergurtabschnitte (26, 26'), eines Handlaufs aufgesetzt ist, wobei die Untergurtabschnitte (26, 26') mit den Verbindungsmitteln (28) verbunden sind.

7. Verbindungssystem nach einem der vorhergehenden Ansprüche, **dadurch gekennzeichnet, dass** die Verbindungsmittel (28) an ihren jeweiligen Enden mit den Untergurtabschnitten (26, 26') durch Verschrauben verbunden sind.

8. Verbindungssystem nach einem der vorhergehenden Ansprüche, **dadurch gekennzeichnet, dass** die Verbindungsmittel (28) mit Madenschrauben (32) in einer während der Montage offen zugänglichen Einschubhaltevorrichtung (30) jeweils am Untergurtabschnitt (26) sowie (26') befestigt sind.

9. Verbindungssystem nach Anspruch 8, **dadurch gekennzeichnet, dass** die Einschubhaltevorrichtungen (30) jeweils klammerartig ausgebildete Haltenasen (34) sowie (34') umfassen, zwischen denen die Verbindungsmittel (28) in die Eischubhaltevorrichtungen (30) eingeschoben und dort in einer geeigneten Position mittig abdeckend an den zu verbindenden Untergurtabschnitten (26, 26') angeordnet sind.

10. Verbindungssystem nach einem der vorhergehenden Ansprüche, **dadurch gekennzeichnet, dass** die Verbindungsmittel (28) als längliche Metallhalter mit einem rechteckigen Längsschnitt sowie mit Schraublöchern (36) zum Einbringen von Madenschrauben (32) ausgebildet sind.

11. Verbindungssystem nach einem der vorhergehenden Ansprüche, **dadurch gekennzeichnet, dass** die ersten Profilverbindungselemente (20) in Systemeinschubrinnen (16) und die zweiten Profilverbindungselemente (20') in Systemhohlräume (22) eingeklopft und/oder verklebt sind.

12. Verbindungssystem nach einem der vorhergehenden Ansprüche, **dadurch gekennzeichnet, dass** die Profilverbindungselemente (20, 20') und/oder die Verbindungsmittel (28) rechteckig und plattenförmig ausgebildet sind und/oder eine geriffelte Fläche und/oder abgefaste Eckbereiche und/oder abgerundete Eckbereiche aufweisen.
